# EUROPÄISCHE PATENTSCHRIFT

(11) **EP 2 873 545 B1**
(45) Veröffentlichungstag und Bekanntmachung des Hinweises auf die Patenterteilung: **02.05.2018**
(21) Anmeldenummer: 14184591.7
(22) Anmeldetag: 12.09.2014
(51) Int. Cl.: B60K 15/04, B60Q 3/00

(54) **Verschlusssystem**
Locking system
Système de fermeture

(30) Priorität: 17.10.2013 DE 102013017285; 21.10.2013 EP 13189499
(43) Veröffentlichungstag der Anmeldung: 20.05.2015
(73) Patentinhaber: Magna Steyr Fuel Systems GmbH, 41516 Grevenbroich (DE)
(72) Erfinder: Malskorn, Ralf, 41469 Neuss (DE)
(74) Vertreter: Zangger, Bernd

(56) Entgegenhaltungen:
- EP-A1- 0 885 764
- EP-A1- 1 264 725
- EP-A2- 1 162 099
- DE-A1- 19 934 422
- DE-A1-102007 043 033
- US-A1- 2011 168 705

## Beschreibung

### Gebiet der Erfindung

Die vorliegende Erfindung betrifft ein Verschlusssystem, insbesondere für einen Kraftstofftank eines Nutzfahrzeuges, umfassend einen Einfüllstutzen und einen innerhalb des Einfüllstutzens angeordneten Führungsstutzen, sowie einen zwischen Einfüllstutzen und Führungsstutzen einbringbaren Verschlussdeckel.

### Stand der Technik

Derartige Verschlusssysteme sind an sich bekannt und verwenden zur Abdichtung zwischen dem Verschlussdeckel und dem Einfüllstutzen normalerweise Flachdichtungen, die jedoch ein hohes Aufdrehmoment erfordern. Dadurch kann es vorkommen, dass der Verschlussdeckel nicht bis zu vorgesehenen Endanschlägen zugedreht wird und hierdurch der Verschlussdeckel zum Einfüllstutzen nicht vollständig abdichtet. Ein Verschlusssystem mit den Merkmalen des Oberbegriffs des Anspruchs 1 ist aus der US 2011/0168705 bekannt.

### Zusammenfassung der Erfindung

Es ist eine Aufgabe der Erfindung, Verschlusssysteme der genannten Art in dieser Hinsicht zu verbessern und insbesondere ein Verschlusssystem anzugeben, der ein Austreten von Kraftstoff aus einem Kraftstoffbehälter zuverlässig verhindert. Dabei soll die Funktion der Dichtung zwischen Verschlussdeckel und Einfüllstutzen über längere Zeit gewährleistet bleiben und durch den Betrieb bzw. die Betankung des Tanks nicht reduziert werden.

Die Lösung der Aufgabe erfolgt durch ein Verschlusssystem umfassend einen Einfüllstutzen und einen innerhalb des Einfüllstutzens angeordneten Führungsstutzen, sowie einen zwischen Einfüllstutzen und Führungsstutzen einbringbaren und am Einfüllstutzen mittels Schraub- oder Bajonettverschluss befestigbaren Verschlussdeckel, wobei eine Ringdichtung zur Aufnahme in eine Ringnut des Verschlussdeckels auf der Innenseite des Einfüllstutzens festgelegt ist und so tief zwischen Einfüllstutzen und Führungsstutzen angeordnet ist, dass ein zwischen Einfüllstutzen und Führungsstutzen angesetztes Zapfventil die Ringdichtung nicht erreicht.

Erfindungsgemäß ist ein Verschlussdeckel, insbesondere über einen Bajonettverschluss der beispielsweise zwischen einem Dichtgehäuse des Verschlussdeckels und dem Einfüllstutzen wirken kann, an einem Einfüllstutzen befestigbar, so dass bei geschlossenem Verschlussdeckel zwischen dem Verschlussdeckel, insbesondere dem Dichtgehäuse des Verschlussdeckels, und dem Einfüllstutzen eine Ringdichtung abdichtet. Die Ringdichtung ist auf dem Einfüllstutzen befestigt und bei geschlossenem Verschlussdeckel in einer Ringnut des Verschlussdeckels aufgenommen. Dabei ist die Ringdichtung bei entferntem Verschlussdeckel durch deren Anordnung zwischen Einfüllstutzen und Führungsstutzen von einem falscherweise zwischen Einfüllstutzen und Führungsstutzen angesetzten Zapfventil nicht erreichbar und daher nicht beschädigbar, da der Abstand zwischen Einfüllstutzen und Führungsstutzen sowie die Tiefe der Ringdichtung im Spalt zwischen Einfüllstutzen und Führungsstutzen so gewählt sind, dass ein Zapfventil mit üblicher Geometrie und insbesondere üblicher Wandstärke die Ringdichtung nicht erreichen kann.

Weiterbildungen der Erfindung sind in den abhängigen Ansprüchen, der Beschreibung sowie den beigefügten Zeichnungen angegeben.

Vorzugsweise ist der Verschlussdeckel am Einfüllstutzen mittels Bajonettverschluss befestigbar, wobei der Verschlussdeckel, insbesondere ein Dichtgehäuse des Verschlussdeckels eine Bajonettrampe, bevorzugt zwei Bajonettrampen, aufweist und der Einfüllstutzen eine in der Bajonettrampe führbare Nocke, bevorzugt bei zwei Bajonettrampen auch zwei Nocken. Der Bajonettverschluss kann insbesondere dazu ausgelegt sein über eine 90 Grad Drehung ein rasches Öffnen und Schließen zu ermöglichen. Der Verschluss kann mit einer Selbsthemmung ausgestattet sein und mit einer Verliersicherung um ein unbeabsichtigtes Lösen des Verschlussdeckels vom Einfüllstutzen zu verhindern.

Vorzugsweise weist der Verschlussdeckel eine Dichtlippe zum Einfüllstutzen hin auf. Diese Dichtlippe kann entweder aus dem Verschlussdeckel ausgeformt sein, also mit diesem einstückig ausgeführt, oder aber als weiche Werkstoffkomponente form- oder stoffschlüssig mit dem Verschlussdeckel verbunden sein. Hierdurch können sich keine Fremdpartikel oberhalb der Ringdichtung absetzen und beim Öffnen in den Tank fallen.

Bevorzugt weist der Verschlussdeckel ein Ventil zur Be- und/oder Entlüftung auf um einen Unterdruck bzw. Überdruck im Tank zu vermeiden.

Bevorzugt weist der Verschlussdeckel ein Schloss auf und ist somit abschließbar.

Besonders bevorzugt weist der Einfüllstutzen seitlich Löcher auf, zur Entlüftung während einer Betankung. Hierbei verdeckt bevorzugt eine selbstschließende Klappe das Schloss, um ein Eindringen von Umwelteinflüssen, insbesondere von Feuchtigkeit und Staub, zu verhindern.

In den Einfüllstutzen können vorzugsweise auch weitere Komponenten integriert sein, wie eine beispielsweise durch eine Federbetätigung oder eine andere geeignete Konstruktion, wie einen Silikondämpfer, selbstschließende Tankklappe und/oder ein auswechselbares Sieb insbesondere als Dieselfilter.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines erfindungsgemäßen Verschlusssystems von der Seite.
- Fig. 2: ist eine Detaildarstellung der Anordnung der Ringdichtung gem. Fig. 1 jedoch ohne Verschlussdeckel.
- Fig. 3: ist eine Schnittansicht eines erfindungsgemäßen Verschlusssystems von oben.
- Fig. 4: ist eine dreidimensionale Ansicht eines erfindungsgemäßen Verschlusssystems.
- Fig. 5: ist eine Explosionsdarstellung der Komponenten eines erfindungsgemäßen Verschlusssystems.
- Fig. 6: ist eine dreidimensionale Ansicht eines Einfüllstutzens mit Führungsstutzen und Dichtgehäuse des Verschlussdeckels.
- Fig. 7: ist eine Schnittansicht gem. Fig. 6 von der Seite.
- Fig. 8, 9, 10: sind Detaildarstellungen des Ventils im Verschlussdeckel in drei verschiedenen Zuständen.
- Fig. 11: ist eine Detaildarstellung der Anordnung der Ringdichtung gem. Fig. 1 mit Verschlussdeckel.

### Detaillierte Beschreibung der Erfindung

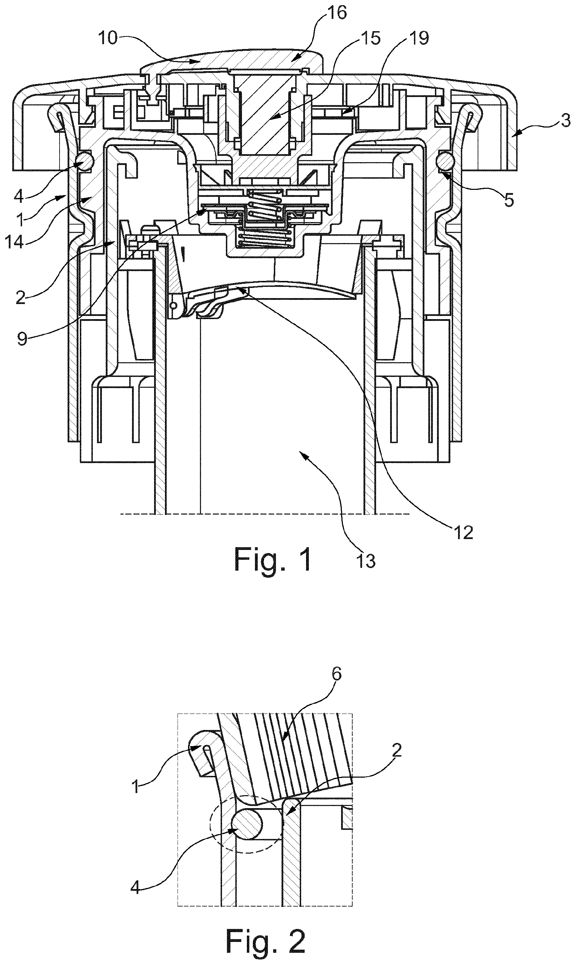

In Fig. 1 ist ein Schnitt durch ein erfindungsgemäßes Verschlusssystem dargestellt, mit einem Einfüllstutzen 1 und einen innerhalb des Einfüllstutzens 1 angeordneten Führungsstutzen 2, sowie einem zwischen Einfüllstutzen 1 und Führungsstutzen 2 eingebrachten Verschlussdeckel 3. Der Verschlussdeckel 3 weist ein Ventil 9 zur Be- und/oder Entlüftung des Tanks in einem Dichtgehäuse 14 auf. Das Dichtgehäuse 14 ist am Einfüllstutzen 1 mittels eines Bajonettverschlusses befestigt. Eine Ringdichtung 4, insbesondere eine O-Ringdichtung, ist auf der Innenseite des Einfüllstutzens 1 angeordnet und in einer Ringnut 5 des Verschlussdeckels 3 aufgenommen. Wie in der Detaildarstellung der Fig. 2 gut ersichtlich, ist die Ringdichtung 4 so tief zwischen Einfüllstutzen 1 und Führungsstutzen 2 angeordnet, dass ein zwischen Einfüllstutzen 1 und Führungsstutzen 2 angesetztes Zapfventil 6 auch bei Falschbenutzung nicht mit der Ringdichtung 4 in Kontakt kommen kann, so dass die Ringdichtung 4 nicht beschädigt werden kann.

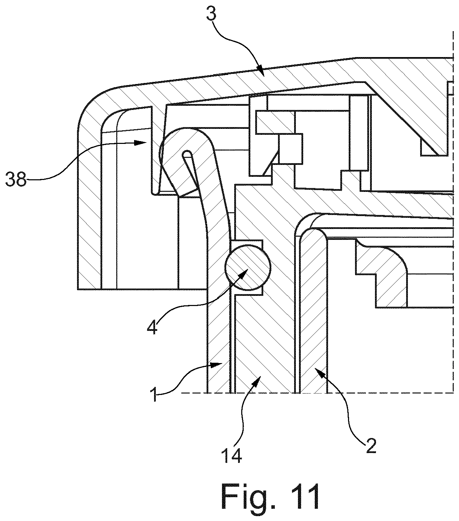

Damit sich keine Fremdpartikel oberhalb der O-Ringdichtung 4 absetzen können, welche beim Öffnen in den Tank fallen könnten, ist eine weitere Außendichtung als federnde Dichtlippe 38 im Verschlussdeckel 3 integriert - wie in Fig. 11 zu sehen. Diese Dichtung kann entweder aus dem Verschlussdeckel 3 mit angeformt sein, oder aber als weiche Werkstoffkomponente form- oder stoffschlüssig mit dem Verschlussdeckel 3 verbunden sein.

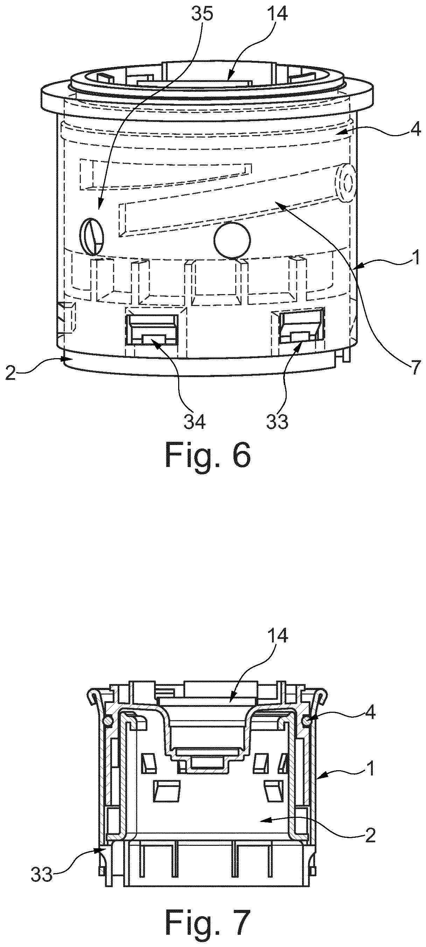

Der Führungsstutzen 2 ist an dessen Außenseite am Einfüllstutzen 1 fixiert, wie in Fig. 6 und 7 näher dargestellt. An dessen Innenseite sind im Führungsstutzen 2 eine selbstschließende, federbetätigte Tankklappe 12 als Rückschlagklappe und ein auswechselbares Sieb 13 als Dieselfilter integriert.

Der Verschlussdeckel 3 weist an dessen Oberseite ein Schloss 10 auf, mit einer bevorzugt selbstschließenden Schloßklappe 16, einem Schließzylinder 15 und einem Schließriegel 19.

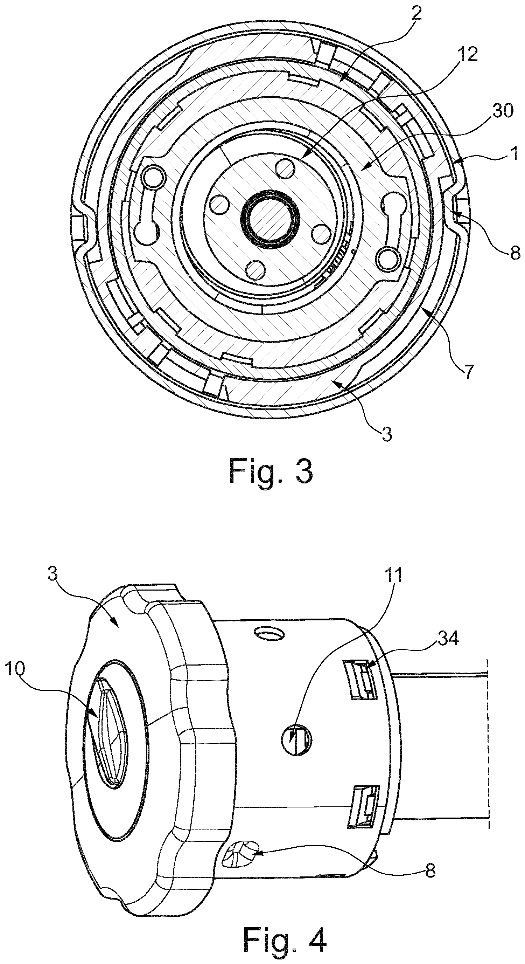

Fig. 3 zeigt einen Schnitt durch ein erfindungsgemäßes Verschlusssystem von oben. Dabei ist zu sehen, dass der Verschlussdeckel 3 am Einfüllstutzen 1 mittels Bajonettverschluss befestigbar ist, wobei der Verschlussdeckel 3 zwei Bajonettrampen 7 aufweist und der Einfüllstutzen 1 zwei in den Bajonettrampen 7 führbare Nocken 8.

Wie in Fig. 4 dargestellt weist der Einfüllstutzen 1 Löcher 11 auf. Diese Löcher 11 dienen zur Entlüftung während einer Betankung und zur Füllhöhenregulierung während der Betankung um höchstmögliche Füllvolumen zu erreichen. Ferner weist der Einfüllstutzen 1 Nocken 8 auf, zur Führung in Bajonettrampen, sowie Fenster 34 zur Fixierung und Positionierung des Führungsstutzens 2.

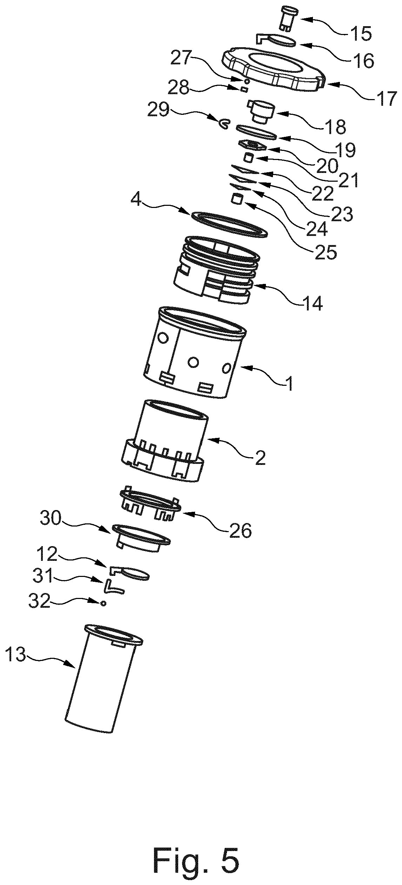

Fig. 5 zeigt eine Explosionsdarstellung eines erfindungsgemäßen Verschlusssystems, mit einem Schließzylinder 15, einer Schloßklappe 16, Deckel 17, Excenterhülse 18, Schließriegel 19, Halteklappe 20, Überdruckfeder 21, Überdruckscheibe 22, Ventildichtung 23, Unterdruckscheibe 24, Unterdruckfeder 25, Dichtgehäuse 14, Einfüllstutzen 1, Führungsstutzen 2, Filter- und Klappenträger 26, konische Druckfeder 27, Haltescheibe Druckfeder 28, Biegefeder 29, Ringdichtung 4, Klappenträger 30, Tankklappe 12, Klappenfeder 31, Scharnierstift Klappe 32 und Sieb 13.

In Fig. 6 sind die Fenster 34 am Einfüllstutzen 1 sowie die Nasen 33 am Führungsstutzen 2 zur Fixierung des Führungsstutzens 2 sichtbar, sowie eine Bajonettrampe 7 mit einer Rückhaltenocke 35 als Verliersicherung für den Verschlussdeckel.

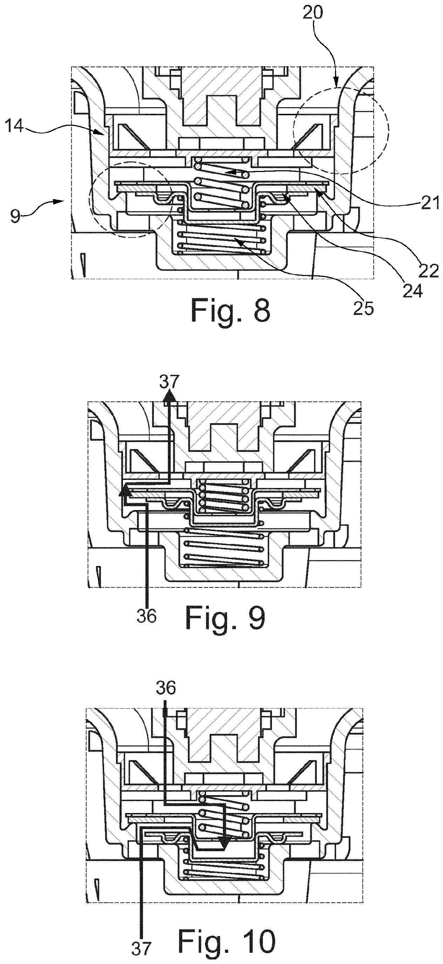

Schließlich zeigen die Fig. 8, 9 und 10 die Funktion des im Verschlussdeckel 3 integrierten Ventils 9. Eine Haltekappe 20 dient zur Sicherung des Ventils 9 bei einem Unfall. In Fig. 8 ist das Ventil 9 geschlossen und somit in dessen Grundstellung. Fig. 9 zeigt das Ventil bei Überdruck, wobei die Überdruckscheibe 22 nach oben, gegen die Überdruckfeder 21 gedrückt wird und ein Austritt von Gas von einem Eintritt 36 zum Austritt 37 ermöglicht wird. Fig. 10 zeigt den umgekehrten Fall, in dem bei Unterdruck die Unterdruckscheibe 24 nach unten, gegen die Unterdruckfeder 25 gezogen wird, und somit ein Gaseintritt vom Eintritt 36 zum Austritt 37 ermöglicht wird.

### Bezugszeichenliste

- 1: Einfüllstutzen
- 2: Führungsstutzen
- 3: Verschlussdeckel
- 4: Ringdichtung
- 5: Ringnut
- 6: Zapfventil
- 7: Bajonettrampe
- 8: Nocke
- 9: Ventil
- 10: Schloss
- 11: Loch
- 12: Tankklappe
- 13: Sieb
- 14: Dichtgehäuse
- 15: Schließzylinder
- 16: Schloßklappe
- 17: Deckel
- 18: Excenterhülse
- 19: Schließriegel
- 20: Halteklappe
- 21: Überdruckfeder
- 22: Überdruckscheibe
- 23: Ventildichtung
- 24: Unterdruckscheibe
- 25: Unterdruckfeder
- 26: Filter- und Klappenträger
- 27: konische Druckfeder
- 28: Haltescheibe Druckfeder
- 29: Biegefeder
- 30: Klappenträger
- 31: Klappenfeder
- 32: Scharnierstift Klappe
- 33: Nase
- 34: Fenster
- 35: Rückhaltenocke
- 36: Eintritt
- 37: Austritt
- 38: Dichtlippe

## Patentansprüche

1. Verschlusssystem umfassend einen Einfüllstutzen (1) und einen innerhalb des Einfüllstutzens (1) angeordneten Führungsstutzen (2), sowie einen zwischen Einfüllstutzen (1) und Führungsstutzen (2) einbringbaren und am Einfüllstutzen (1) mittels Schraub- oder Bajonettverschluss befestigbaren Verschlussdeckel (3),
wobei eine Ringdichtung (4) auf der Innenseite des Einfüllstutzens (1) befestigt ist, **dadurch gekennzeichnet, dass** bei geschlossenem Verschlussdeckel (3) die Ringdichtung (4) in eine Ringnut (5) des Verschlussdeckels (3) aufnehmbar ist, und dass die Ringdichtung (4) so tief zwischen Einfüllstutzen (1) und Führungsstutzen (2) angeordnet ist, dass ein zwischen Einfüllstutzen (1) und Führungsstutzen (2) angesetztes Zapfventil (6) die Ringdichtung (4) nicht erreicht, wobei im Führungsstutzen (2), an dessen Innenseite, eine selbstschließende, federbetätigte Tankklappe (12) als Rückschlagklappe und ein auswechselbares Sieb (13) als Dieselfilter integriert sind.

2. Verschlusssystem nach Anspruch 1,
**dadurch gekennzeichnet, dass** der Verschlussdeckel (3) am Einfüllstutzen (1) mittels Bajonettverschluss befestigbar ist, wobei der Verschlussdeckel (3) eine Bajonettrampe (7), bevorzugt zwei Bajonettrampen (7), aufweist und der Einfüllstutzen (1) eine in der Bajonettrampe führbare Nocke (8), bevorzugt zwei Nocken (8).

3. Verschlusssystem nach zumindest einem der vorhergehenden Ansprüche,
**dadurch gekennzeichnet , dass** der Verschlussdeckel (3) eine Dichtlippe (38) zum Einfüllstutzen (1) hin aufweist, insbesondere zum am Außendurchmesser des Einfüllstutzens (1).

4. Verschlusssystem nach zumindest einem der vorhergehenden Ansprüche,
**dadurch gekennzeichnet , dass** der Verschlussdeckel (3) ein Ventil (9) zur Be- und/oder Entlüftung bei Unterdruck bzw. Überdruck aufweist.

5. Verschlusssystem nach zumindest einem der vorhergehenden Ansprüche,
**dadurch gekennzeichnet , dass** der Verschlussdeckel (3) ein Schloss (10) aufweist.

6. Verschlusssystem nach zumindest einem der vorhergehenden Ansprüche,
**dadurch gekennzeichnet , dass** der Einfüllstutzen (1) Löcher (11) aufweist zur Entlüftung während einer Betankung.

## Claims

1. Closure system comprising a filler neck (1) and a guide socket (2) arranged inside the filler neck (1), as well as a closure cap (3) which is able to be introduced between the filler neck (1) and the guide socket (2) and which is able to be fastened to the filler neck (1) by means of a screw or bayonet connection,
wherein an annular seal (4) is fastened to the inner face of the filler neck (1), **characterized in that** when the closure cap (3) is closed the annular seal (4) can be received in an annular groove (5) of the closure cap (3), and **in that** the annular seal (4) is arranged sufficiently deeply between the filler neck (1) and the guide socket (2) that a nozzle (6) placed between the filler neck (1) and the guide socket (2) does not reach the annular seal (4) wherein a self-closing spring-activated tank flap (12) is integrated as a non-return flap and a replaceable filter (13) is integrated as a diesel filter in the guide socket (2), on the inner face thereof.

2. Closure system according to Claim 1,
**characterized in that** the closure cap (3) is able to be fastened to the filler neck (1) by means of the bayonet closure, wherein the closure cap (3) has a bayonet ramp (7), preferably two bayonet ramps (7), and the filler neck (1) has a cam (8), preferably two cams (8), able to be guided in the bayonet ramp.

3. Closure system according to at least one of the preceding claims,
**characterized in that** the closure cap (3) has a sealing lip (38) toward the filler neck (1), in particular toward the outer diameter of the filler neck (1).

4. Closure system according to at least one of the preceding claims,
**characterized in that** the closure cap (3) has a valve (9) for aeration and/or deaeration in the case of negative pressure and/or overpressure.

5. Closure system according to at least one of the preceding claims,
**characterized in that** the closure cap (3) has a lock (10).

6. Closure system according to at least one of the preceding claims,
**characterized in that** the filler neck (1) has holes (11) for deaeration when filling up the tank.

## Revendications

1. Système de fermeture comprenant une tubulure de remplissage (1) et une tubulure de guidage (2) disposée à l'intérieur de la tubulure de remplissage (1), ainsi qu'un couvercle de fermeture (3) pouvant être introduit entre la tubulure de remplissage (1) et la tubulure de guidage (2) et pouvant être fixé à la tubulure de remplissage (1) par une fermeture par vissage ou à baïonnette, un joint d'étanchéité annulaire (4) étant fixé sur le côté intérieur de la tubulure de remplissage (1), **caractérisé en ce que** lorsque le couvercle de fermeture (3) est fermé, le joint d'étanchéité annulaire (4) peut être reçu dans une rainure annulaire (5) du couvercle de fermeture (3), et **en ce que** le joint d'étanchéité annulaire (4) est disposé si profondément entre la tubulure de remplissage (1) et la tubulure de guidage (2) qu'une valve de distribution (6) disposée entre la tubulure de remplissage (1) et la tubulure de guidage (2) n'atteigne pas le joint d'étanchéité annulaire (4), un clapet de réservoir (12) à fermeture automatique, commandé par ressort, en tant que clapet antiretour et un filtre remplaçable (13) en tant que filtre diesel étant intégrés dans la tubulure de guidage (2) au niveau de son côté intérieur.

2. Système de fermeture selon la revendication 1, **caractérisé en ce que** le couvercle de fermeture (3) peut être fixé à la tubulure de remplissage (1) au moyen d'une fermeture à baïonnette, le couvercle de fermeture (3) présentant une rampe de baïonnette (7), de préférence deux rampes de baïonnette (7), et la tubulure de remplissage (1) présentant une came (8) pouvant être guidée dans la rampe de baïonnette, de préférence deux cames (8) .

3. Système de fermeture selon au moins l'une quelconque des revendications précédentes, **caractérisé en ce que** le couvercle de fermeture (3) présente une lèvre d'étanchéité (38) vers la tubulure de remplissage (1), en particulier vers le diamètre extérieur de la tubulure de remplissage (1).

4. Système de fermeture selon au moins l'une quelconque des revendications précédentes, **caractérisé en ce que** le couvercle de fermeture (3) présente une soupape (9) pour la ventilation et/ou le désaérage en cas de dépression ou de surpression.

5. Système de fermeture selon au moins l'une quelconque des revendications précédentes, **caractérisé en ce que** le couvercle de fermeture (3) présente une serrure (10).

6. Système de fermeture selon au moins l'une quelconque des revendications précédentes, **caractérisé en ce que** la tubulure de remplissage (1) présente des trous (11) pour le désaérage pendant un remplissage du réservoir.
